# EUROPEAN PATENT APPLICATION

(11) **EP 1 315 101 A2**
(43) Date of publication of application: **28.05.2003**
(21) Application number: 02257946.0
(22) Date of filing: 19.11.2002
(51) Int. Cl.: G06F 17/30

(54) **Method and apparatus of generating platform-dependent data suitable for transmission**

(30) Priority: 20.11.2001 GB 0127722
(71) Applicant: Hewlett-Packard Company, Palo Alto, CA 94304 (US)
(72) Inventor: Gianetti, Fabio, Bristol BS32 9DS (GB)
(74) Representative: Lawrence, Richard Anthony

(57) **Abstract**

A method of generating data suitable for transmission to at least one data-receiving device, said method comprising the following steps: specifying said data in a first and a second portion, said first portion being substantially independent of any formatting, and said second portion containing said formatting for said first portion specified in a platform independent manner; transforming said second portion, using a first transform, to generate a platform dependent portion containing said formatting specified in a platform dependent manner; and combining said first portion with said platform dependent portion using a second transform to generate said data suitable for transmission to said at least one data-receiving device. This method may be suitable for generating data suitable for transmission to a variety of platforms including WML, HTML, XSL-FO, etc. based devices.

## Description

This invention relates to a method of generating data, an improved apparatus for performing such generation, together with an improved data structure facilitating said method.

Many documents are now published electronically, and can be intended for publication on a number of different mediums. For example the same document can be published upon a variety of devices including any of the following: a web page, a WAP (wireless application protocol) telephone, a web enabled television, a personal digital assistant (PDA) (whether landscape, or portrait versions), a printer, etc. Each of these devices has considerably different display capabilities and as such the same document cannot be displayed on each of the devices without modification.

Data can be presented in any number of ways and still convey the same information to a reader. Thus, the content of a set of data is separate from the presentation of the document. Page description languages such as HTML are well known and allow a user to write a content document specifying how they wish the data to be display when the content document is rendered. However, this single content document therefore contains both the data content and also its format.

Such methods are disclosed in patent applications such as WO 01/90873, which discloses a method of delivering web pages to mobile devices such as mobile telephones, etc. and as such translates a document written in a specific language to other formats. This document teaches a method of identifying components of a document, for example a web page, and maintaining appropriate relationships between those components when the page is reconfigured to be suitable for transmission to devices. To achieve this WO 01/90873 teaches to generate a mark up language (RML) version of the document according to user preferences, and from this to generate a style sheet containing the formatting. This style sheet is used to modify the original document to generate versions of the document suitable for transmission.

According to a first aspect of the invention there is provided a method of generating data suitable for transmission to at least one data-receiving device, said method comprising the following steps:
i. specifying said data in a first and a second portion, said first portion being substantially independent of any formatting, and said second portion containing said formatting for said first portion specified in a platform independent manner;
ii. transforming said second portion, using a first transform, to generate a platform dependent portion containing said formatting specified in a platform dependent manner;
iii. combining said first portion with said platform dependent portion using a second transform to generate said data suitable for transmission to said at least one data-receiving device.

An advantage of such a method is that it allows a single first portion to be written, which will be can be combined with a plurality of second portions to make it suitable for transmitting to a number of different data-receiving devices. This is especially advantageous for first portions that are lengthy, and it is desired to display said first portion in substantially the same style throughout. (The skilled person will appreciate that the style comprises the formatting for the data at any one point; for example the font that is used, the justification, the line spacing, etc.) In such circumstances it is likely that the first portion will be substantially longer than the second portion and that therefore, much storage space will be saved because only a single copy of the first portion will be required, rather than a copy for each platform to which it is desired to transmit, as in the prior art. The method will still be advantageous in instances where there is less of a marked difference in the size of the first and second portions due to the space saving and time saved in being able to generate suitable for transmission to a number of platforms from a single first portion.

It will be appreciated that a transform may be any process that combines two or more items.

Preferably, the first portion comprises a portion of text, preferably containing at least one marker allowing said text to be identified. Ideally, said marker identifies a paragraph, or other section, such that paragraph, or section, specific formatting can be applied to said paragraph, or section. An advantage of such an arrangement is that it allows a variety of different formats to be applied to the data contained in the first portion. There may be a plurality of markers contained in the first portion.

Conveniently, the second portion contains at least one of the following items of formatting information: font type, font size, font colour, font weight (i.e. whether the font is to be displayed in italic, bold, normal, , etc.), justification, line spacing, character spacing, or any other item of formatting information.

Preferably, the first and second portions are held in separate files. Such an arrangement is convenient because it makes finding and editing the data more convenient.

Alternatively, it would be possible for the first and second portions to be held in the same file.

Preferably, the first transform accesses the file in which the second portion is stored and generates a third file. Further, the second transform may access both the file in which the first portion is stored and the third file in order to generate said data suitable for transmissions to said at least one data-receiving device, which may in turn be stored in a fourth file.

Conveniently, the first portion and/or the second portion are written in a device independent language. In the most preferred embodiment the first and second portions are written in XML. An advantage of using XML is that it is a platform independent language, which is provided with a dedicated transform language.

The first and/or the second transform may be written in XSL. Use of XSL is particularly advantageous if the first and /or the second portions are written in XML due to the close ties between XSL and XML.

The method may comprise holding the data on a server and arranging said server to perform the method upon receipt of a request for said data. The request may be from a data-receiving device for data to be sent thereto, or may be from a first data-receiving device requesting that data should be sent to a second.

The method may comprise generating the said data suitable for transmission to said at least one data-receiving device when a request for said data is received. As such a fourth file containing said data suitable for transmission to said at least one data-receiving device may not be created, or one may be created when the request is received. Such an arrangement is advantageous because it reduces the amount of storage space that is required to store the data.

However, in an alternative embodiment said data suitable for transmission to said at least one data-receiving device may be generated in advance and stored for transmission to a data-receiving device. Therefore, should a fourth file containing the data suitable for transmission to said at least on data-receiving device be created it may be held on the server. Such an arrangement is itself advantageous because it is less intensive and therefore, will require less processing power and may therefore run on less powerful hardware.

The method may be capable of generating said data suitable for transmission to any of the following data-receiving devices: a WAP enabled telephone, a web enabled television, a printer, a browser (for example MICROSOFT EXPLORER, or NETSCAPE NAVIGATOR), a PDA, etc.

According to a second aspect of the invention there is provided a computer readable medium holding a program arranged to run the method of the first aspect of the invention.

A computer readable medium may comprise any one of the following: a floppy disk, a CDROM, a DVD ROM/RAM, a ZIP disk, LS120 disk, any other suitable physical format, a transmitted signal, an internet download, etc.

According to a third aspect of the invention there is provided a data structure accessible by a processing apparatus for processing and subsequent transmission to a data-receiving device, comprising in combination:
a first portion containing data that it is desired to send to said data-receiving devices, held in a platform independent form, and being substantially free of any formatting information;
a second portion specifying how the first portion should be displayed on said data-receiving device, said second portion containing said formatting information for said first portion specified in a platform independent manner.

Preferably, the first and/or second portions are written in a mark-up language. The mark-up language may be any language defined by one of the following: XML, SGML, or any other suitable mark-up language specification.

Conveniently, the first and second portions are held as separate files. The skilled person will appreciate that the first and second portions could be held as separate portions within the same file, but this is likely to be less convenient.

According to a fourth aspect of the invention there is provided a processing apparatus arranged to hold data intended for transmission to at least one data-receiving device, said data being held in at least a first substantially independent of any formatting, and a second portion containing said formatting for said first portion specifying formatting for said first portion in a platform independent manner, said apparatus comprising processing circuitry including a transmitter and receiver, said receiver arranged to receive a data request and pass said request to said processing circuitry, on receipt of said data request said processing circuitry being arranged to transform said second portion to generate a platform dependent portion suitable for sending to said data-receiving device and further to combine said platform dependent portion with said first portion to generate a data-receiving device specific portion, and further being arranged to send said data-receiving device specific portion to said transmitter for transmission to said data-receiving device.

There now follows by way of example only a detailed description of the present invention with reference to the accompanying drawings of which:
**Figure 1** schematically shows the architecture of a computer capable of acting as a server for this invention;
**Figure 2** schematically shows how a document can be sent to a number of different devices; and
**Figure 3** schematically shows the processes of the present invention.

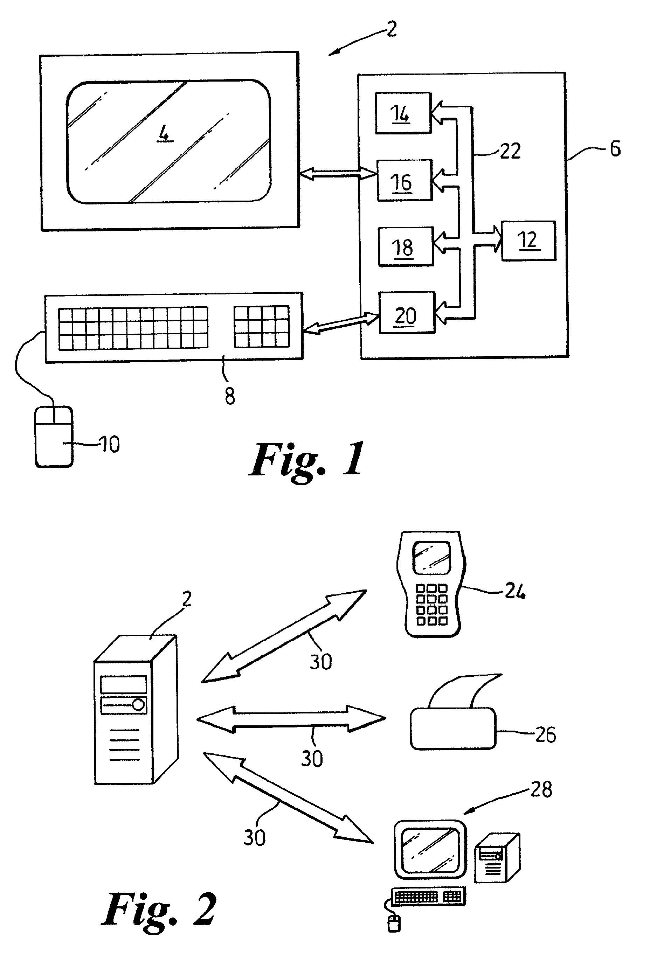

This particular invention is applicable to distribute data electronically, and in particular via the World Wide Web, or in short the web. Such technology is well known. Generally the data to be distributed is held on a processing apparatus, or server 2, as shown in Figure 1, and can be requested by any number of devices that are capable of communicating with the server 2. Indeed, a first device can make a request for data to be sent to a second device.

In this embodiment the processing apparatus, or server 2, comprises a display 4, processing circuitry 6, a keyboard 8, and mouse 10. The processing circuitry 6 further comprises a processing unit 12, a hard drive 14, a video driver 16, memory 18 (RAM and ROM) and an I/O subsystem 20 which all communicate with one another, as is known in the art, via a system bus 22. The processing unit 12 comprises an INTEL PENTIUM series processor, running at typically between 900MHz and 1.7GHz.

As is known in the art the ROM portion of the memory 18 contains the Basic Input Output System (BIOS) that controls basic hardware functionality. The RAM portion of memory 18 is a volatile memory used to hold instructions that are being executed, such as program code, etc. The hard drive 14 is used as mass storage for programs and other data.

Other devices such as CDROMS, DVD ROMS, network cards, etc. could be coupled to the system bus 22 and allow for storage of data, communication with other computers over a network, etc.

The server 2 could have the architecture known as a PC, originally based on the IBM specification, but could equally have other architectures. The server could may be an APPLE, or may be a RISC system, and may run a variety of operating systems (perhaps HP-UX, LINUX, UNIX, MICROSOFT NT, AIX™, or the like).

In this embodiment data, in this case data is held on the server 2, which stores the data and distributes it on request to a requesting data-receiving device. The requesting data-receiving device can be any device that is capable of communicating with the server 2. When the server 2 receives a request from a data-receiving device or another device it will forward the requested data onto the appropriate data-receiving device, after generating data suitable for transmission to said at least one data-receiving device as described hereinafter. (The server 2 may generate the data suitable for transmission to said at least one data-receiving device in advance, or when the request for data is received). This arrangement is schematically represented in Figure 2, which shows a WAP enabled telephone 24, a printer 26 and a PC 28 in communication with the server via a network connection 30.

Data suitable for transmission to said at least one data-receiving device may be capable of being displayed on a variety of devices. For example a PC 28 may be programmed so that it can receive and correctly process data presented in WML format, which would generally be used for WAP enabled telephones. As such, reference to platform is intended to cover any device that is capable of receiving said data suitable for transmission to said at least one data-receiving device in any one particular format.

The code shown in appendix I is written in XML (eXtensible Mark-up Language), but could be equally stored using other suitable mark-up languages. XML requires pairs of tags to be placed within a document. Theses tags do not specify how the information should be presented, but specify the content of the information between the pairs of tags. The skilled person will fully understand XML, but a full description can be found at http://www.w3.org, and the brief description below will aid his/her understanding.

The skilled person will appreciate how an XML document is structured: written in words, or data sub-items, which are collected into data sub-item groups. The data sub-item groups can comprise sentences, paragraphs, or simply collections of words. The data sub-item groups, or even just data sub-items, are placed between pairs of tags.

The tags appear as follows: <variable>, and </variable>, with variable being any word, or character string acceptable according to the XML recommendation. Further, each data sub item group can be itself broken down into a number of sub-items. This structure is convenient and allows for easy manipulation and searching of the complete data item.

The code shown in appendices II and IV is written as an XSL transformation (XSLT). The skilled person will appreciate that *XSL* is a language for expressing stylesheets consisting of three parts: i. the XSL language for expressing XSL transformation of XML documents; ii. an XPATH language used by the XSL language for referring to parts of a document; and a vocabulary for specifying formatting semantics.

An XSL stylesheet specifies the presentation of a class of XML documents by describing how an instance of the class is transformed into an XML document that uses the formatting vocabulary. A fuller description of XSL can be viewed on the web site of the World Wide Web consortium (http://www.w3.org).

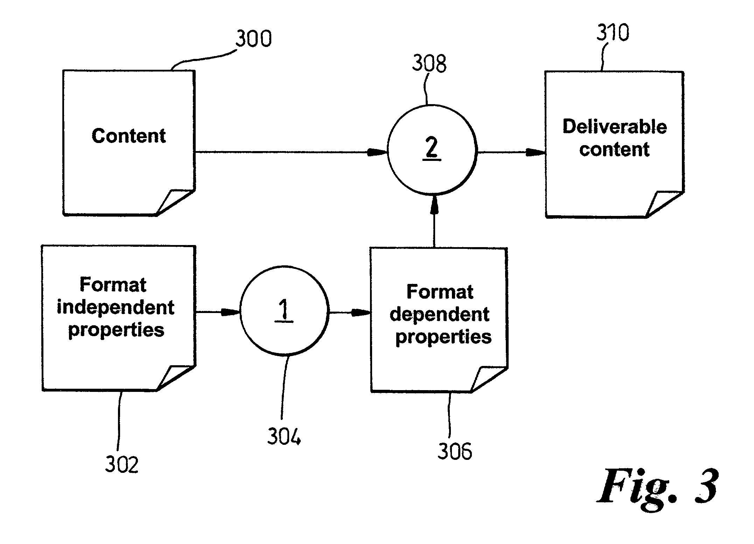

Figure 3 shows one embodiment of how the present invention can be realised. A content document 300, or first portion of data, is written such that it contains the data content and does not contain any formatting information. The content document 300 contains a number of markers that identify paragraphs therein, and is held in a first file on the server 2.

A second, format independent properties, document 302, or second portion of data, contains the desired formatting for the content document written in a format (or device) independent manner. This format independent properties document 302 is held in a second file on the server 2. An example of such a document is provided in appendix I, and in this embodiment is written in XML. This format independent properties document 302 specifies the following parameters: fontfamily, i.e. the font in which the content will appear (serif); fontsize i.e. the size of the font in which the content will appear (medium); the font style, in this case normal; the weight of the font, in this case normal; the colour of the font, in this case black; the alignment of the font, in this case justified; and the spacing of the font, in this case 2em (a relative dimension that a renderer will calculate according to other parameters).

It will be apparent to the skilled person that any other property of a font could be specified by the format independent properties document 302. For example whether or not the font is italic, in bold, underlined, etc. could all be specified.

Further, although the format independent properties document shown in appendix II shows only one particular set of formatting, it would be possible for it to contain a number of different sets. As such, different paragraphs, or other sections, within the content document 300 could have a different set of formatting applied thereto. The markers provided in the content document 300 allow the correct set of formatting to be applied to the correct paragraph, or other section.

A first transform process 304 processes the format independent properties document 302 to generate a format dependent properties document 306 (which may be thought of as platform dependent portion) therefrom, which is stored in a third file on the server 2. This format dependent properties document 306 is device dependent and a separate document must be generated for each device, or set of devices, on which it is desired to display information. In the present example the format independent properties document 302 is transformed into three separate format dependent property documents 306. Appendix II shows the following documents: an XSL stylesheet suitable for transforming into a WML document for transmission to a WAP enabled telephone 24, an XSL stylesheet suitable for transforming into an HTML document for transmission to a browser running on a computer 28; and an XSL stylesheet suitable for transforming into a XSL-FO document suitable to be rendered into a page description language and to be printed on a printer 26. Appendix III shows the results of these transform processes.

Once the format dependent properties document 306 has been generated for a particular platform it must be combined with the content document 300 before a deliverable content document 310 can be obtained, suitable for transmission to a data-receiving device.

This combining of the format dependent properties document 306 with the content document 300 is performed by a second process 308 that is defined by an appropriate XSL stylesheet. The resulting deliverable content is held in a fourth file on the server 2. Examples of such stylesheets are shown in appendix IV. Again, because in this embodiment a document is being generated for a WAP telephone 24, a printer 26, and a browser running on a PC 28 three separate style sheets are required, and an example of each of these is shown in appendix IV.

The second process applies an appropriate set of formatting as defined in the format dependent properties document 306 with the appropriate paragraph, or section, defined by the markers in the content document 300.

Looking at the XSL stylesheet that generates the XSL code in appendix II, a portion 400 switches on the <FontFamily> tags provided in the format independent properties document 302 to generate a line of code 500 in the HTML format dependent properties document 306 specifying that the "serif" font should be used.

Next a portion 402 of the stylesheet for the first process switches on the <FontSize> tags within the XML format independent properties document 302 to determine the size of the font that should be used to display the document. The result of this portion can be seen at 502 in appendix III, in the XSL code for the format dependent properties document 306.

A portion of the code 404 within the XSL stylesheet determines the colour of the text in which the text will be displayed by using the <colour> tag within the format independent properties document 302, and generates the line 504 in appendix III. Thus, the colour that will be specified in the HTML deliverable content document 310 when it is generated will be black.

Further, a portion of the code 406 switches on the <FontWeight> tag within the format independent properties document 302 to generate a line within the format dependent properties document 306 specifying whether the text should be bold, italic, underlined, etc. Because the format independent properties document 302 specifies that the FontWeight should be normal, no line is generated in the format dependent properties document 306.

Once the format dependent properties document 306 has been generated, as described above, it is combined with the content document 300, by the style sheet 308 shown in appendix IV. Looking at the XSL stylesheet to generate the HTML version, the line 550 imports the file "CurrentTextElementHTMLPropertyInstance.XSL", which is the format dependent properties document 306 generated by the first transform process.

Although not discussed in detail, the WML, and XSL-FO versions of the code shown in the appendices function in a similar manner. The skilled person will also appreciate that other transforms, and languages are possible, and that the three page description languages used herein are provided merely as examples.

In its broadest concept the invention may be considered as a method of generating data suitable for transmission to at least one data receiving device said method comprising the following steps: specifying the data in at least a first and a second portion, said first portion containing said data, and said second portion specifying how said first portion should be displayed in a device independent manner; transforming said second portion into a device dependent manner and combining said first and said transformed second portions into a data-receiving device specific document to generate said device specific data suitable for transmission to said data-receiving device.

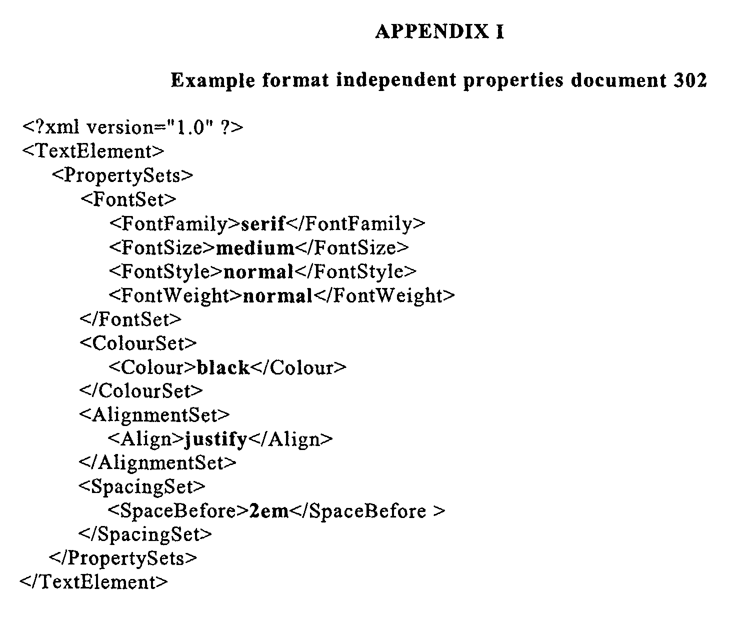

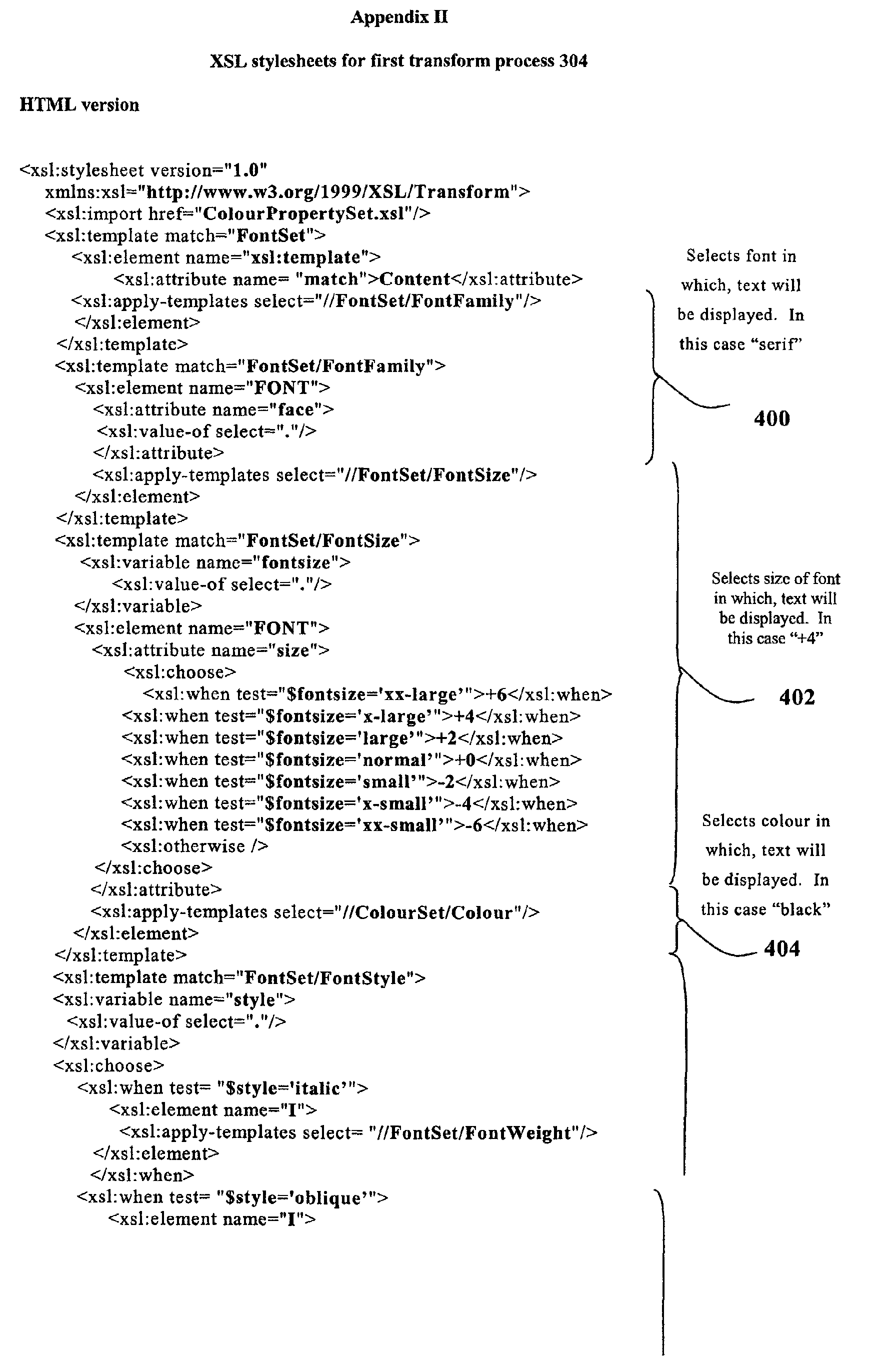

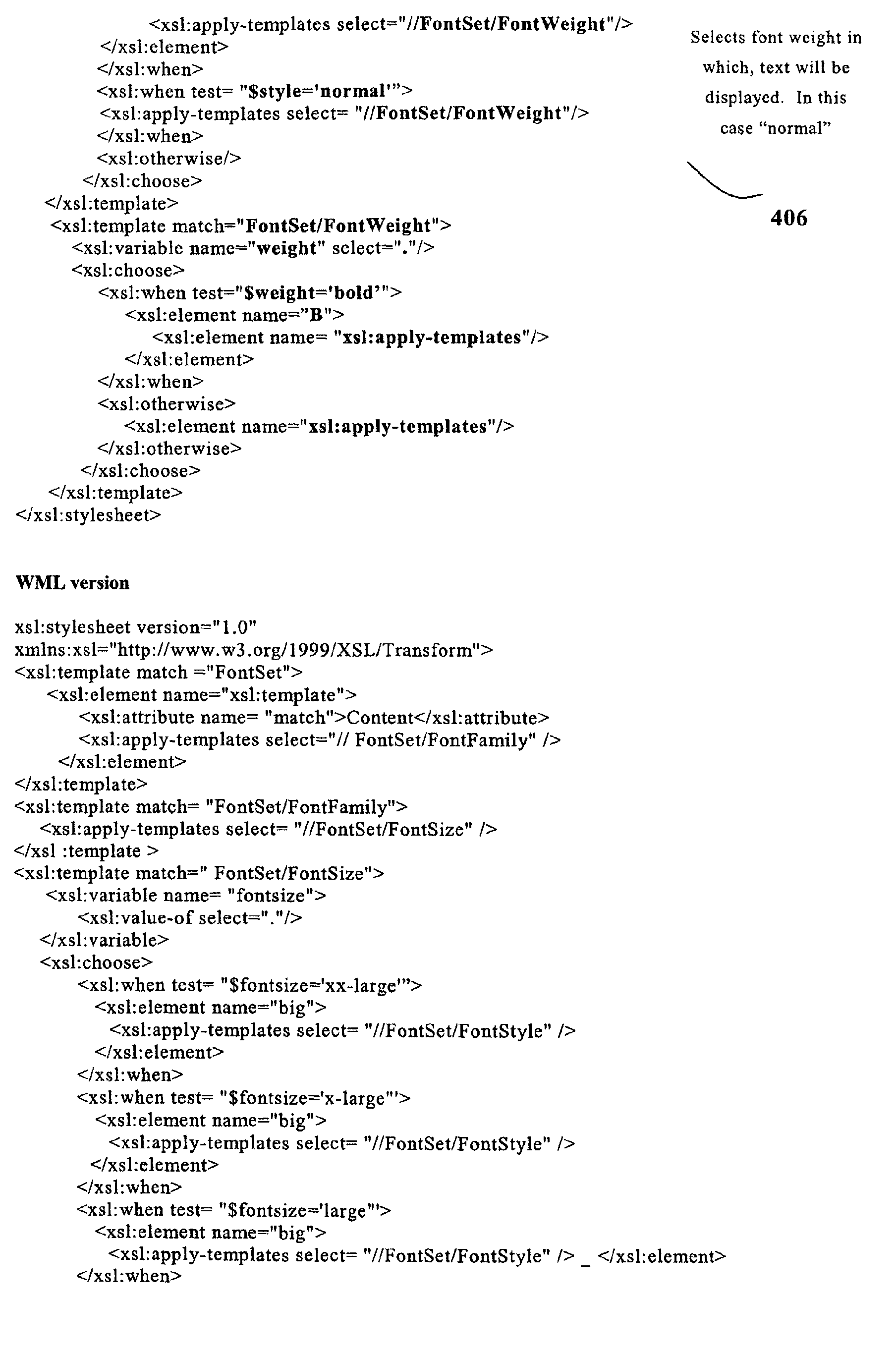

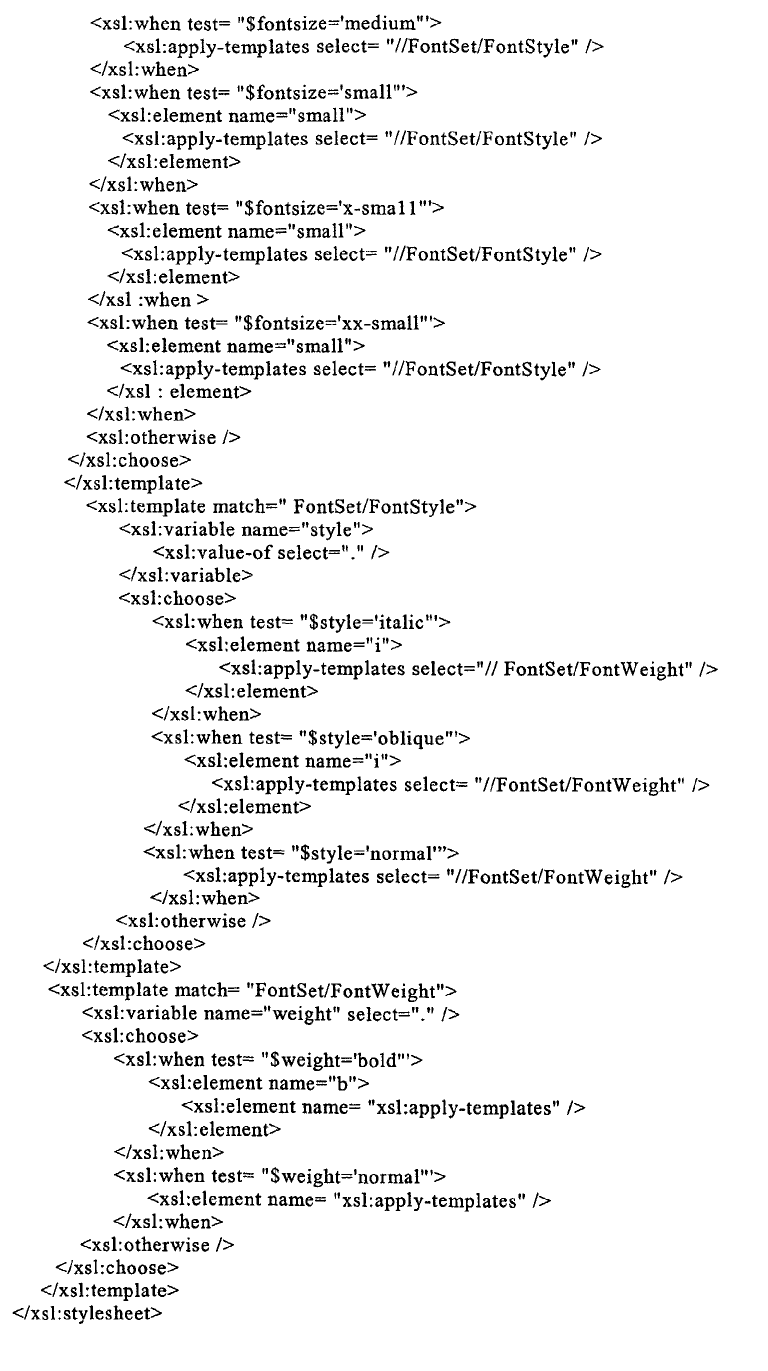

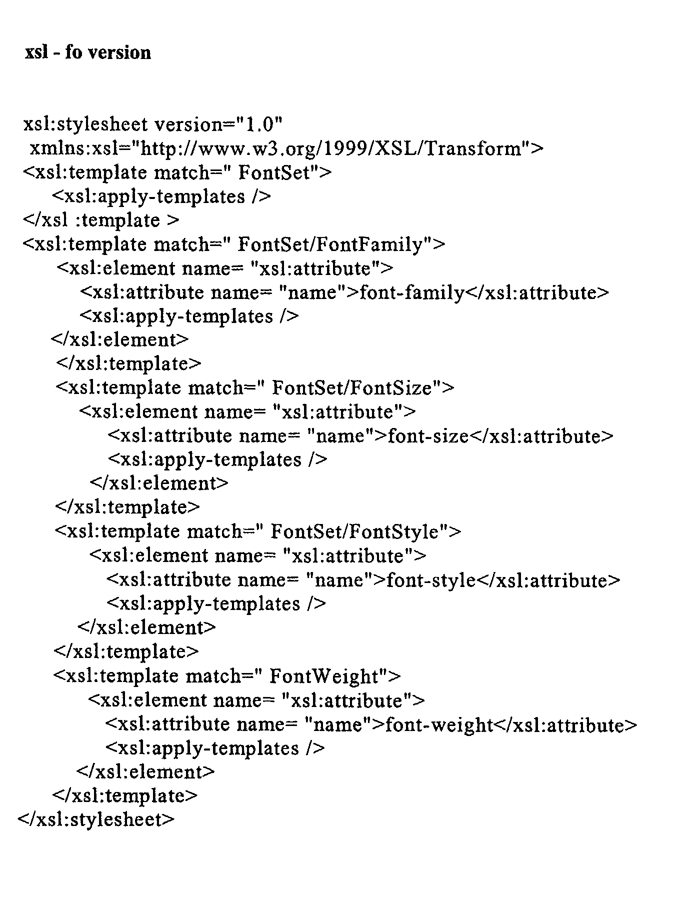

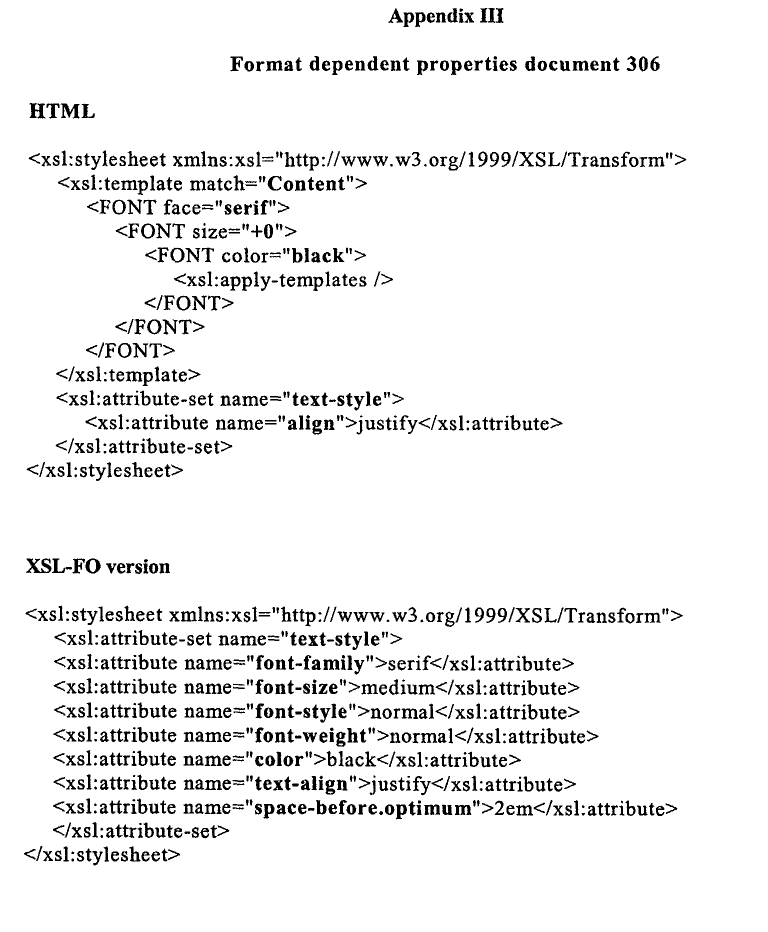

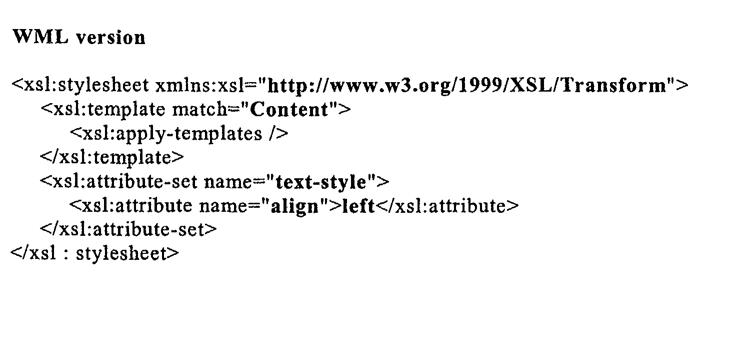

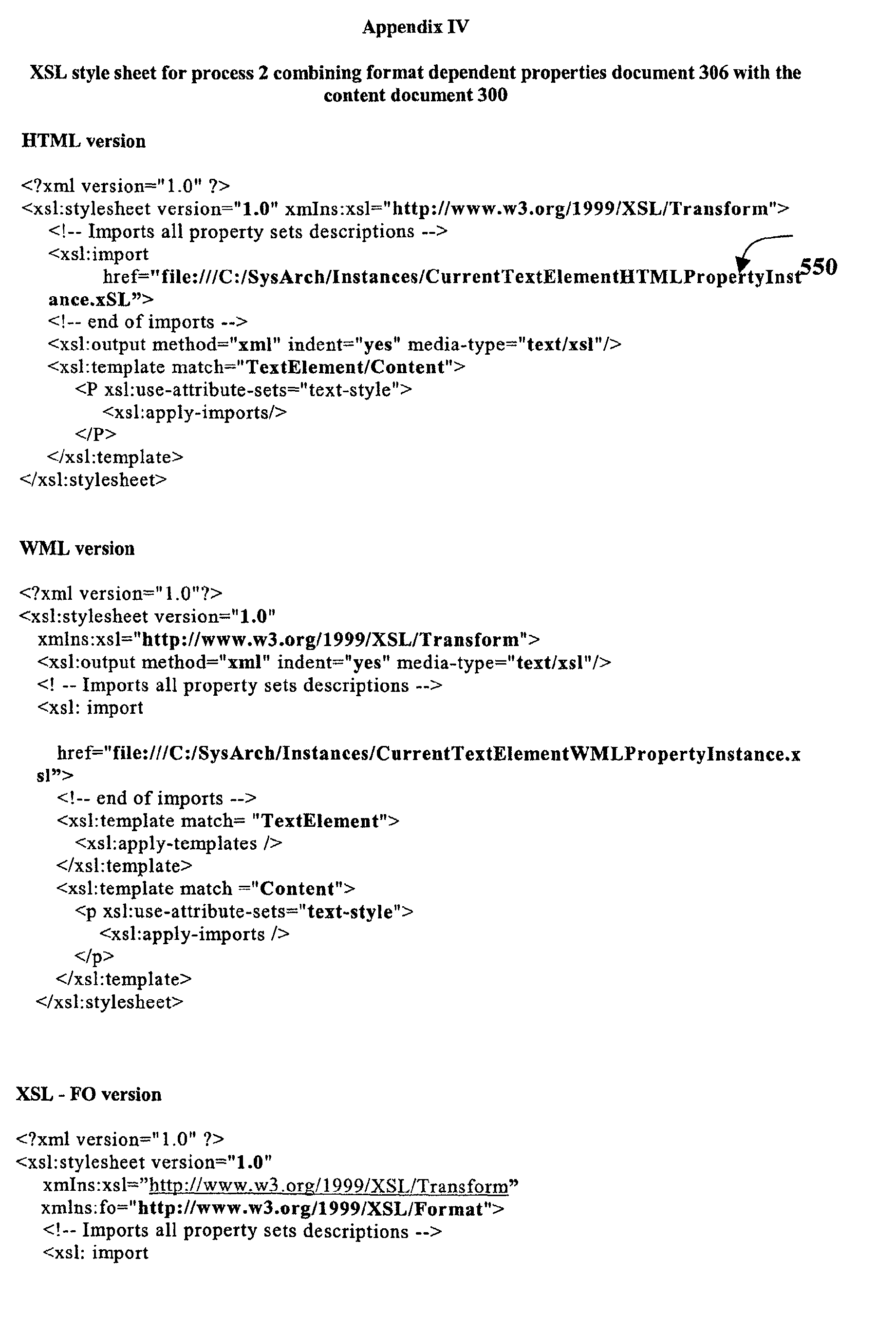

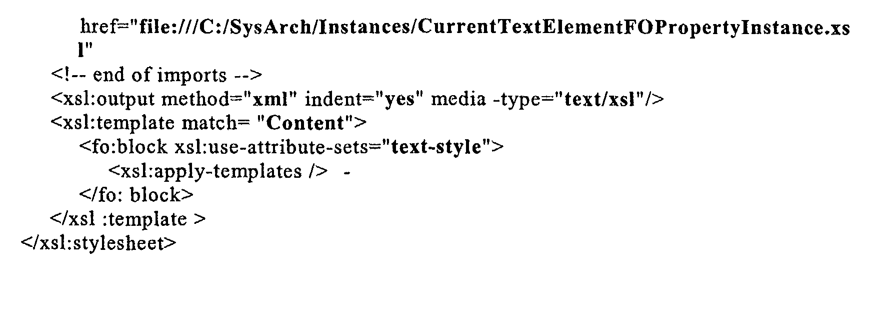

## Claims

1. A method of generating data suitable for transmission to at least one data-receiving device, said method comprising the following steps:
i. specifying said data in a first (300) and a second portion (302), said first portion (300) being substantially independent of any formatting, and said second portion (302) containing said formatting for said first portion (300) specified in a platform independent manner;
ii. transforming said second portion (302), using a first transform (304), to generate a platform dependent portion (306) containing said formatting specified in a platform dependent manner; and
iii. combining said first portion (302) with said platform dependent portion (306) using a second transform (308) to generate said data (310) suitable for transmission to said at least one data-receiving device.

2. A method according to claim 1 wherein the method is arranged such that said first portion (300) contains at least one marker identifying a section of the first portion (300).

3. A method according to claim 2 wherein said marker identifies a paragraph, or other section, such that formatting specific to said paragraph, or other section, can be applied to said paragraph, or other section.

4. A method according to any preceding claim wherein said method arranges said second portion (302) such that it contains at least one of the following items of formatting information: font type, font size, font colour, font weight (i.e. whether the font is to be displayed in italic, bold, normal, ), justification, line spacing, character spacing.

5. A method according to any preceding claim wherein said first (300) and second portions (302) are held in separate files.

6. A method according to any preceding claim wherein said first portion (300) is written in a device independent language.

7. A method according to claim 6 wherein said device independent language is XML.

8. A method according to any preceding claim wherein said second portion (302) is written in a device independent language.

9. A method according to claim 8 wherein said device independent language is XML.

10. A method according to any preceding claim wherein said first transform (304) is written in XSL.

11. A method according to any preceding claim wherein said second transform (308) is written in XSL.

12. A method according to any preceding claim comprising holding said data on a server and arranging said server to perform said method upon receipt of a request for said data.

13. A method according to claim 12 wherein said request is from a data-receiving device for data to be sent thereto.

14. A method according to claim 12 wherein said request is from a first data-receiving device requesting that data should be sent to a second data-receiving device.

15. A method according to any preceding claim in which said data suitable for transmission to said at least one data-receiving device is generated in advance and stored for transmission to a data-receiving device.

16. A computer readable medium holding a program arranged to run the method of any of claims 1 to 15.

17. A data structure accessible by a processing apparatus for processing and subsequent transmission to a data-receiving device, comprising in combination:
a first portion (300) containing data that it is desired to send to said data-receiving devices, held in a platform independent form, and being substantially free of any formatting information;
a second portion (302) specifying how the first portion (300) should be displayed on said data-receiving device, said second portion (302) containing said formatting information for said first portion (300) specified in a platform independent manner.

18. A processing apparatus arranged to hold data intended for transmission to at least one data-receiving device (24,26,28), said data being held in at least a first (300) substantially independent of any formatting, and a second portion (302) containing said formatting for said first portion (300) specifying formatting for said first portion (300) in a platform independent manner, said apparatus comprising processing circuitry (6) including a transmitter and receiver, said receiver arranged to receive a data request and pass said request to said processing circuitry (6), on receipt of said data request said processing circuitry (6) being arranged to transform said second portion (302) to generate a platform dependent portion (306) suitable for sending to said data-receiving device (24,26,28) and further to combine said platform dependent portion (306) with said first portion (300) to generate a data-receiving device specific portion (310), and further being arranged to send said data-receiving device specific portion (310) to said transmitter for transmission to said data-receiving device (24,26,28).

19. A computer readable medium containing instructions, which when programmed into a processing apparatus cause that processing apparatus to function as the apparatus of claim 18.
